# EUROPÄISCHE PATENTSCHRIFT

(11) **EP 1 965 176 B1**
(45) Veröffentlichungstag und Bekanntmachung des Hinweises auf die Patenterteilung: **30.07.2014**
(21) Anmeldenummer: 07405066.7
(22) Anmeldetag: 01.03.2007
(51) Int. Cl.: G01D 5/06, G01D 5/165

(54) **Sensor zum Erfassen der Position eines beweglichen magnetischen Objekts und eine den Sensor aufweisende Fördervorrichtung**
Sensor for recording the position of a moveable magnetic object and a conveyor device equipped with the sensor
Capteur destiné à détecter la position d'un objet magnétique mobile et un dispositif d'acheminement muni du capteur

(43) Veröffentlichungstag der Anmeldung: 03.09.2008
(73) Patentinhaber: J. Wagner AG, 9450 Altstätten (CH)
(72) Erfinder: Mohr, Godram, 9450 Altstätten / SG (CH); Hutter, Ignaz, 9451 Kriessem (CH); Stieger, Thomas, 9452 Hinterforst (CH)
(74) Vertreter: Nückel, Thomas

(56) Entgegenhaltungen:
- EP-A1- 0 559 634
- WO-A1-81/03077
- DE-A1- 4 335 004
- GB-A- 2 267 392

## Beschreibung

### Technisches Gebiet

Die Erfindung betrifft einen Sensor zum Erfassen der Position eines beweglichen magnetischen Objekts sowie eine den Sensor aufweisende Fördervorrichtung. Die Fordervorrichtung kann beispielsweise zum Fördern und Dosieren von Beschichtungsmaterial zum Beschichten von Werkstücken dienen.

### Stand der Technik

Aus der europäischen Patentschrift EP 0 116 879 B1 ist eine Vorrichtung zum Dosieren und Mischen von zwei Komponenten A und B bekannt. Die beiden Komponenten, die im Folgenden auch als Beschichtungsmaterial A und Beschichtungsmaterial B bezeichnet werden, werden jeweils mittels einer Förderpumpe jeweils einem Durchflussmengenmesser zugeführt. Den beiden Durchflussmengenmessern sind Ventile nachgeordnet, die pneumatisch mittels einer Steuerung geöffnet und geschlossen werden. Mit Hilfe der Durchflussmesser werden die Durchflussmengen der Komponenten A und B gemessen und entsprechende elektrische Messignale an die Steuerung abgegeben. Ist das eingestellte Volumen der einen Komponente erreicht, wird der Materialfluss dieser Komponente unterbrochen und sofort der Durchfluss für die andere Komponente freigegeben. Die beiden Komponenten A und B werden einem 2-Kammer-Mischblock zugeführt und anschließend endgültig in einem nachgeschalteten Mischrohr gemischt und an eine Spritzpistole abgegeben. Diese Ausführungsform hat jedoch den Nachteil, dass bei abrasiven Materialien die Durchflussmengenmesser nicht mehr verwendbar sind, da sie einem zu hohem Verschleiß unterliegen.

In der Druckschrift GB 2 267 392 A wird ein druckabhängiger variabler Widerstand (Potentiometer) beschrieben, der eine Widerstandsbahn, eine darüber beabstandet angeordnete leitfähige Bahn und eine bewegliche Kugel umfasst. Wird auf die Kugel eine Druckkraft ausgeübt, wird die leitfähige Bahn an der Stelle, an der sich die Kugel gerade befindet, auf die Widerstandsbahn gedrückt. Die Position eines Kolbens einer Fördervorrichtung kann damit allerdings nicht erfasst werden.

Aus der Druckschrift WO 81/03077 ist ein Sensor zum Erfassen der Position des magnetischen Teils eines Kolbens bekannt. Der Sensor ist oberhalb des magnetischen Teils des Kolbens angeordnet und besteht aus einer Widerstandsbahn und einer darüber beabstandet angeordneten Elektrode aus elektrisch leitfähigem magnetischen Material. Die Kontaktelektrode hat die Form eines Streifens mit mehreren Zungen. Jene Zunge, die sich oberhalb des magnetischen Teils des Kolbens befindet, wird durch diesen angezogen und kontaktiert die Widerstandsbahn. Die Position des Kontaktes ist elektronisch ermittelbar.

Aus der Druckschrift EP 0 559 634 A1 ist eine Wegmesseinrichtung bekannt. Sie umfasst ein Messelement mit einem streifenförmigen Kraftmess-Positionswiderstand. Die Wegmesseinrichtung umfasst zudem ein Übertragungseiement mit einem Druckelement, das senkrecht zur Oberfläche des Kraftmess-Positionswiderstandes an diesen angedrückt wird. Die Position des Druckelements ist relativ zu den Enden des Kraftmess-Positionswiderstandes über eine Auswerteeinheit bestimmbar.

### Darstellung der Erfindung

Eine Aufgabe der Erfindung ist es, einen Sensor anzugeben mit dem die Position eines magnetischen Objekts berührungslos erfassbar ist.

Vorteilhafter Weise arbeitet der erfindungsgemäße Sensor weitgehend verschleißfrei. Ein weiterer Vorteil besteht darin, dass der Sensor auch in einer explosionsgefährdeten Umgebung einsetzbar ist, wie sie beilspielsweise beim Beschichten mit lösungsmittelhaltigen Lacken vorherrscht.

Zudem kann der erfindungsgemäße Sensor in einer Vorrichtung zum Fördern und Dosieren von Beschichtungsmaterial verwendet werden, um die Durchflussmenge des Beschichtungsmaterials zu erfassen. Das Beschichtungsmaterial kann aus mehreren verschiedenen Komponenten, wie beispielsweise Wasser und Wasserlack oder Lösungsmittel und Lack bestehen. Der Sensor kann auch in einer Vorrichtung zum Fördern und Dosieren von Ein- oder Mehrkomponenten-Klebstoff, Schaum und Treibmittel, Dichtmaterial, Farbe oder Vergussmasse verwendet werden.

Die Aufgabe wird durch einen Sensor zum Erfassen der Position eines beweglichen magnetischen Objekts mit den Merkmalen gemäß Patentanspruch 1 gelöst.

Der erfindungsgemäße Sensor zum Erfassen der Position eines beweglichen magnetischen Objekts umfasst eine Widerstandsbahn und eine darüber angeordnete Kontaktelektrode. Zudem umfasst der Sensor einen magnetischen Positionsgeber, der derart ausgebildet ist, dass er dem magnetischen Objekt folgen kann, dass er entlang der Kontaktelektrode bewegbar ist und durch den die Kontaktelektrode mit der Widerstandsbahn in Kontakt bringbar ist.

Eine weitere Aufgabe ist es, eine den erfindungsgemäßen Sensor aufweisende Fördervorrichtung anzugeben, wobei die Erfassung der von der Vorrichtung geförderten Durchflussmenge mit Hilfe des Sensors berührungslos erfolgt. Zudem soll die Fördervorrichtung verschleißarm arbeiten.

Die Aufgabe wird durch eine Fördervorrichtung mit den Merkmalen gemäß Patentanspruch 8 gelöst.

Die erfindungsgemäße Fördervorrichtung umfasst eine Förderpumpe und einen Motor zum Antreiben der Förderpumpe. Die Förderpumpe oder der Motor weisen eine angetriebene, wenigstens teilweise magnetische Komponente auf. Zudem umfasst die Fördervorrichtung einen Sensor zum Erfassen der Position der Komponente, wobei der Sensor eine Widerstandsbahn und eine darüber angeordnete Kontaktelektrode aufweist. Darüber hinaus weist der Sensor einen magnetischen Positionsgeber auf, der derart ausgebildet ist, dass er der Komponente folgen kann, wobei der Positionsgeber entlang der Kontaktelektrode bewegbar ist und wobei durch den Positionsgeber die Kontaktelektrode mit der Widerstandsbahn in Kontakt bringbar ist. Schließlich umfasst die Fördervorrichtung eine Steuerung, die als IstWert das vom Sensor stammende Sensorsignal verwendet.

Vorteilhafte Weiterbildungen der Erfindung ergeben sich aus den in den abhängigen Patentansprüchen angegebenen Merkmalen.

Bei einer Ausführungsform des erfindungsgemäßen Sensors ist der Positionsgeber ferromagnetisch oder paramagnetisch. Ist beispielsweise das zu erfassende Objekt permanent magnetisch, genügt es, wenn der Positionsgeber ferromagnetisch ist.

Bei einer weiteren Ausführungsform des erfindungsgemäßen Sensors ist der Positionsgeber derart geformt, dass mit ihm ein punktueller Druck auf der Kontaktelektrode erzeugbar ist. Indem lediglich ein punktueller Druck auf die Kontaktelektrode aufgebracht wird, kann die für die Herstellung des Kontakts erforderliche Kraft klein gehalten werden. Zudem hat ein punktueller Kontakt zwischen Kontaktelektrode und Widerstandsbahn den Vorteil, dass die Position des zu erfassenden Objekts genauer bestimmbar wird.

Vorteilhafterweise hat bei dem erfindungsgemäßen Sensor der Positionsgeber die Form einer Kugel.

Zudem ist es von vorteil, wenn das Gehäuse des Sensors aus Aluminium oder einem elektrisch leitenden Kunststoff hergestellt ist.

Der erfindungsgemäße Sensor kann vorteilhafterweise in einem System zum Fördern von Beschichtungsmaterial zum Beschichten von Werkstücken verwendet werden.

Bei der erfindungsgemäßen Fördervorrichtung kann die magnetische Komponente der Kolben oder die Kolbenstange des Motors sein. Die magnetische Komponente kann aber auch der Kolben oder die Kolbenstange der Farbstufe oder die Kupplung, die den Motor mit der Farbstufe verbindet, sein. Die magnetische Komponente kann ferromaqnetisch oder permanentmagnetisch sein.

Bei einer Ausführungsform der erfindungsgemäßen Fördervorrichtung ist der Positionsgeber ferromagnetisch oder permanent magnetisch.

Bei einer weiteren Ausführungsform der erfindungsgemäßen Fördervorrichtung hat der Positionsgeber die Form einer Kugel.

Bei einer Weiterbildung der erfindungsgemäßen Fördervorrichtung sind eine weitere Förderpumpe und ein weiterer Motor zum Antreiben der weiteren Förderpumpe vorgesehen. Zudem ist ein weiterer Sensor vorgesehen, um die Position einer angetriebenen magnetischen Komponente des weiteren Motors oder der weiteren Förderpumpe zu erfassen. Der weitere Sensor weist eine Widerstandsbahn und eine dar über angeordnete Kontaktelektrode sowie einen magnetischen Positionsgeber auf. Der Positionsgeber ist derart ausgebildet, dass ei der magnetischen Komponente folgen kann und entlang der Kontaktelektrode bewegbar ist. Durch den Positionsgeber ist die Kontaktelektrode mit der Widerstandsbahn in Kontakt bringbar. Die Steuerung ist derart ausgebildet und betreibbar, dass sie anhand der Sensorsignale das Mischungsverhältnis der von den Förderpumpen geförderten Materialien steuert.

### Kurze Beschreibung der Zeichnungen

Im Folgenden wird die Erfindung mit mehreren Ausführungsbeispielen anhand von 11 Figuren weiter erläutert.
- Figur 1: zeigt eine Prinzipdarstellung eines Kolbenmotors mit seitlich montiertem Sensor zur Erfassung der Position des Kolbens.
- Figur 2: zeigt eine erste mogliche Ausführungsform des erfindungsgemäßen Sensors zur Positionserfassung eines beweglichen Objekts in einer dreidimensionalen Ansicht im Längsschnitt.
- Figur 3: zeigt eine Seitenansicht der ersten Ausführungsform des Sensors im Längsschnitt.
- Figur 4: zeigt eine zweite mögliche Ausführungsform des erfindungsgemäßen Sensors zur Erfassung der Position eines beweglichen magnetischen Objekts in einer ersten Seitenansicht.
- Figur 5: zeigt die zweite Ausführungsform des Sensors in einer zweiten Seitenansicht im Schnitt.
- Figur 6: zeigt die zweite Ausführungsform des erfindungsgemäßen Sensors in einer dreidimensionalen Ansicht.
- Figur: 7 zeigt die zweite Ausführungsform des erfindungsgemäßen Sensors in der Draufsicht im Querschnitt.
- Figur 8: zeigt eine mögliche Ausführungsform einen Potentiometers, wie es in dem erfindungsgemäßen Sensor Verwendung finden kann.
- Figur 9: zeigt das elektrische Ersatzschaltbild des Potentiometers.
- Figur 10: zeigt eine erste mögliche Ausführungsform einer den Sensor aufweisenden Vorrichtung zum Fördern und Dosieren von zwei Materialkomponenten in Form eines Blockschaltbilds.
- Figur 11: zeigte eine zweite mögliche Ausführungsform einer den Sensor aufweisenden Vorrichtung zum Fördem und Dosieren von zwei Materialkomponenten in Form eines Blockdiagramms.

### Wege zur Ausführung der Erfindung

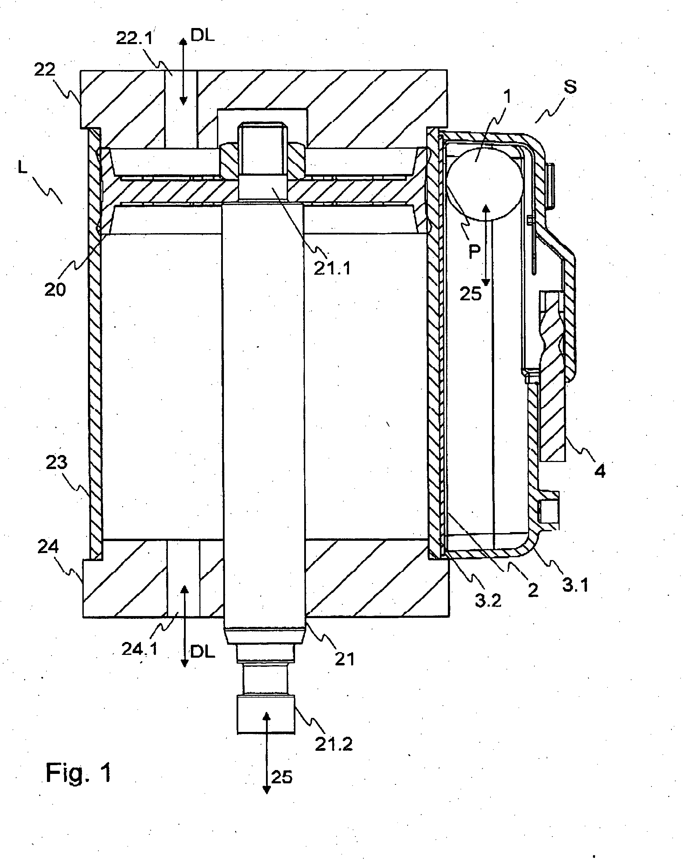

In Figur 1 ist ein Kolbenmotor L mit einem soitlich daran befestigten Sensor S zu Erfassung der Position des Kolbens 20 des Kolbenmotors L im Querschnitt gezeigt. Der Kolbenmotor L wird mit Druckluft DL betrieben und daher auch als Luftmotor bezeichnet.

Der Kolbenmotor L umfasst einen Zylinder, in dem der Kolben 20 und eine Kolbenstange 21 beweglich gelagert sind. Die Kolbenstange 21 ist an ihrem oberen Ende 21.1 mit dem Kolben 20 verbunden. Um den Kolben 20 und die Kolbenstange 21 zu bewegen, wird der Zylinder, bestehend aus einem Zylinderboden 24, einer Zylinderwand 23 und einem Zylinderdeckel 22, über Bohrungen 22.1 beziehungsweise 24.1 mit der Druckluft DL beaufschlagt. Wird beispielsweise Druckluft DL über die Bohrung 22.1 in den Zylinder geleitet, wird der Kolben 20 zusammen mit der Kolbenstange 21 nach unten gedrückt. Die Bewegungsrichtung des Kolbens 20 und der Kolbenstange 21 ist durch den Pfeil 25 gekennzeichnet.

Der Kolben 20 ist ganz oder teilweise magnetisch ausgebildet. Wird nur ein Teil des Kolbens 20 magnetisch ausgebildet, erfolgt dies vorzugsweise auf der dem Sensor S zugewandten Seite des Kolbens 20. Der Kolben 20 kann mit einem Permanentmagneten ausgerustet sein. Alternativ dazu kann der Kolben 20 auch aus einem ferromagnetischen Werkstoff hergestellt sein. In einer Ausführungsform ist der Kolben 20 aus Stahl gefertigt.

An der Außenseite der Zylinderwand 23 ist der erfindungsgemäße Sensor S befestigt. Der Sensor S umfasst ein Gehäuse, bestehend aus einem Gehäusedeckel 3.1 und einem Gehäuseboden 3.2, sowie ein Potentiometer 2, welches sich über die gesamle Hubhöhe des Kolbens 20 erstreckt und am Gehäuseboden 3.2 des Sensors S befestigt ist. Zudem umfasst der Sensor S einen magnetischen Positionsgeber 1. Bei der in Figur 1 gezeigten Ausführungsform ist der magnetische Positionsgeber 1 als magnetische Kugel 1 ausgebildet, die durch magnetische Kräfte vom Kolben 20 angezogen wird. In Figur 1 befindet sich die Kugel 1 am oberen Ende des Hubwegs und drückt aufgrund der Magnetkräfte an der Stelle P auf das Potentiometer 2. Wird nun der Kolben 20 durch die Druckluft DL nach unten bewegt, folgt die Kugel 1 aufgrund der Magnetkräfte dem Kolben 20. Auf diese Weise wandert der Druckpunkt P auf dem Potentiometer 2 ebenfalls nach unten, so dass sich der elektrische Widerstand des Potentiometers 2 verändert. Der elektrische Widerstand ist somit von der Lage der Kugel 1 beziehungsweise der Lage des Kolbens 20 abhängig und damit ein Maß für die Position der Kugel 1 beziehungsweise des Kolbens 20. Über die elektrischen Anschlüsse 4 ist das Potentiometer 2 des Sensors S mit einer externen Auswerteelektronik verbindbar.

Um die Krattkopplung zwischen der Kugel 1 und dem Kolben 20 nicht zu beeinflussen, ist es von Vorteil, wenn das Zylindergehäuse 23 aus einem nicht magnetischen Material besteht.

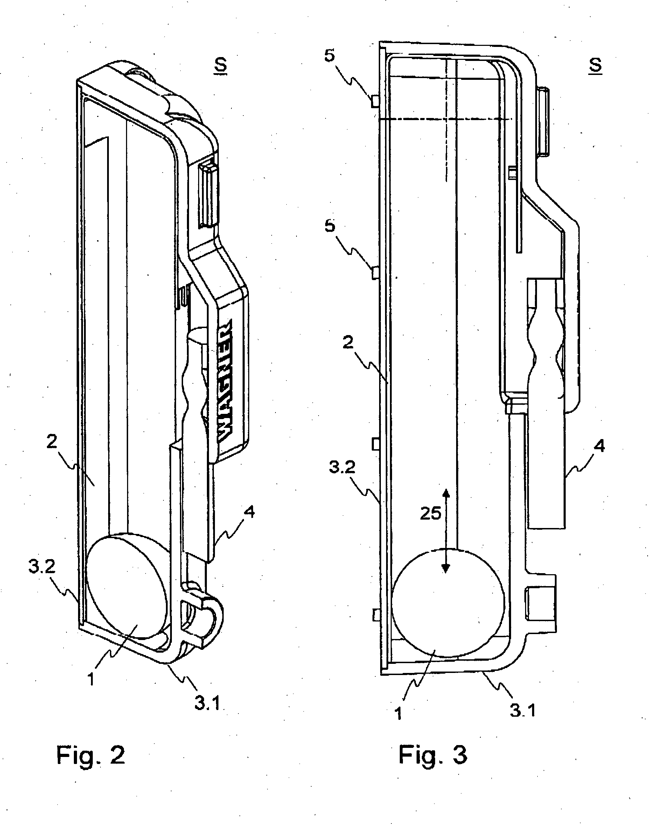

In Figur 2 ist die erste Ausführungsform des erfindungsgemäßen sensors S in einer dreidimensionalen Ansicht im Längsschnitt gezeigt. Die elektrischen Anschlüsse 4 werden dabei seitlich aus dem Sensor S herausgeführt.

In Figur 3 ist die erste Ausführungsform des erfindungsgemäßen Sensors S in einer zweidimensionalen Ansicht im Längsschnitt gezeigt. Das Potentiometer 2 kann auf den Gehäuseboden 3.2 aufgeklebt sein. Der Gehäuseboden 3.2 weist auf seiner Außenseite Noppen 5 auf, welche die Schnittstelle zwischen dem planen Gchäuseboden 3.2 und der gekrümmten Zylinderwand 23 bilden. Mit Hilfe der Noppen 5 kann der Sensor S auf Flächen mit verschiedenen Krümmungen montiert werden, ohne dass es einer baulichen Anpassung des Sensors S bedarf.

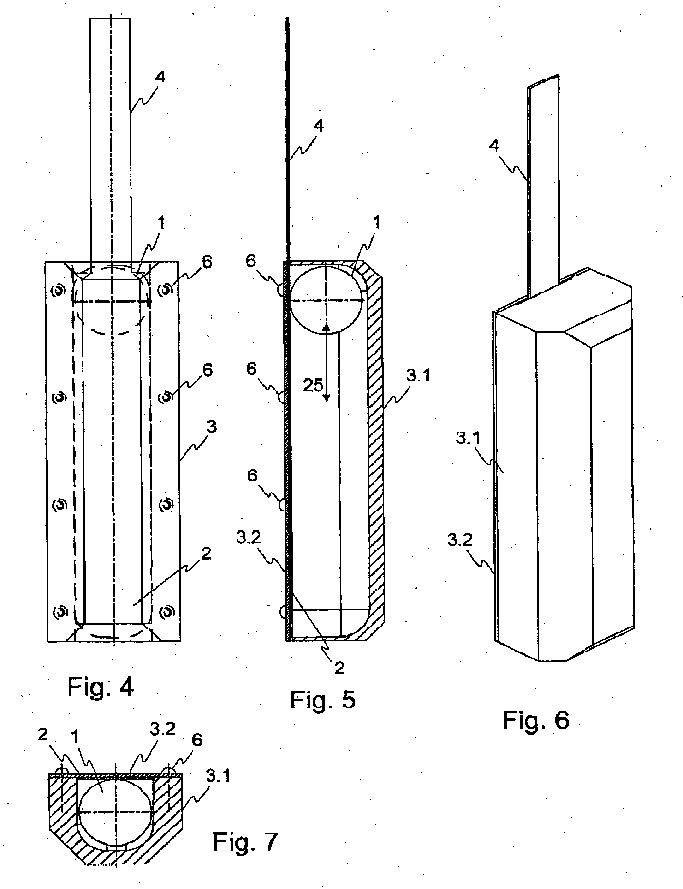

In den Figuren 4, 5, 6 und 7 ist eine zweite mögliche Ausführungsform des erfindungsgemäßen Sensors S gezeigt. Dabei ist in Figur 4 eine erste Seitenansicht, in Figur 5 eine zweite Seitenansicht im Längsschnitt, in Figur 6 eine dreidimensionale Ansicht und in Figur 7 der Querschnitt der zweiten Ausführungsform des erfindungsgemäßen Sensors in der Draufsicht gezeigt. Die Funktionsweise des in den Figuren 4 bis 7 dargestellten Sensors entspricht der Funktionsweise des in Figuren 2 und 3 dargestellten Sensors. Im Unterschied zur ersten Austührungsform des Sensors wird bei der zweiten Ausführungsform des Sensors die elektrische Kontaktierung 4 nach oben hin aus dem Sensorgehäuse 3.1, 3.2 herausgeführt. Der Gehäuseboden. 3.2 ist mit dem Gehäusedeckel 3.1 mittels mehrerer Schrauben 6 verschraubt. Die Köpfe der Schrauben 6 übernehmen zusatzlich die gleiche Funktion wie die Noppen 5 des Sensors aus den Figuren 2 und 3.

Für beide Ausführungsformen des Sensors S gilt: Der Gehäusedeckel 3.1 sowie der Gehäuseboden 3.2 können aus einem elektrisch leitfähigen Kunststoff als Spitzgussteile hergestellt sein. Das Sensorgehäuse 3.1, 3.2 kann statt dessen auch aus Aluminium hergestellt sein. Wird das Gehäuse aus Aluminium hergestellt, treten Wirbelstromeffekte zwischen der Magnetkugel 1 und dem Gehäuse 3.1, 3.2 auf, was einen günstigen Einfluss auf die Dämpfung von Überschwingungen und den Jitter des elektrischen Signals hat.

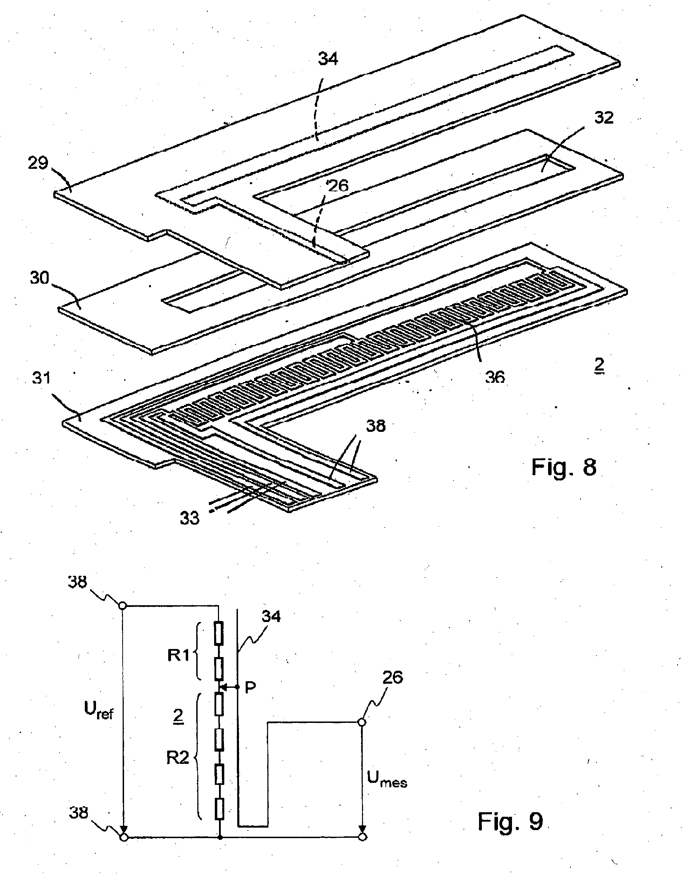

In Figur 8 ist eine mögliche Ausführungsform des Potentiometers 2 in einer Explosionszeichnung dargestellt. Das Potentiometer ist als Folienpotentiometer ausgebildet. Auf einer Folie 31 befindet sich eine meanderförmige Widerstandsbahn 36, deren Enden als Kontaktanschlüsse 38 ausgebildet sind. Optional kann die Widerstandsbahn 36 mit Kalibrieranschlüssen 33 versehen sein. Oberhalb der Folie 31 ist eine weitere Folie 30 angeordnet, die im Bereich der Widerstandsbahn 36 eine entsprechende Aussparung 32 aufweist. Die Folie 30 dient als Abstandshalter zwischen der Folie 31 und einer weiteren Folie 29. Auf der Unterseite der weiteren Folie 29 befindet sich eine Kontaktelektrode 34 mit einem Elektrodenanschluss 26. Im Ruhezustand, das heißt, wenn keine Kräfte auf das Potentiometer 2 einwirken, sind die Kontaktelektrode 34 und die Widerstandsbahn 36 beabstandet zueinander, so dass zwischen der Kontaktelektrode 34 und der Widerstandsbahn 36 kein elektrischer Kontakt besteht. Wird nun auf die Folie 29 beziehungsweise auf die Kontaktelektrode 34 eine ausreichend große Kraft - beispielsweise über die Kugel 1 - eingeleitet, wird die Kontaktelektrode 34 an der Stelle, an der die Kraft eingeleitet wird, auf die Widerstandsbahn 36 gedrückt, so dass an dieser Stelle in elektrischer Kontakt zwischen der Kontaktelektrode 34 und der Widerstandsbahn 36 hergestellt wird.

Das zum Potentiometer 2 gemäß Figur 8 gehörige elektrische Ersatzschaltbild ist in Figur 9 gezeigt. Das Poten tiometer 2 arbeitet als Spannungsteiler. Wird an die beiden Elektroden 38 eine Referenzspannung U_{ref} angelegt und wird mit der Kugel 1 an der Druckstelle P die Kontakt elektrode 34 mit der widerstandsbahn 36 in Verbindung gebracht, so wird der Gesamtwiderstand der Widerstandsbahn 36 in zwei Widerstände R1 und R2 aufgeteilt. Der am Widerstand R2 gemessene Spannungsabfall Uₘₑₛ ist dann ein Maß für Position der Kugel 1 beziehungsweise des Kolbens 20.

Das Potentiometer 2 kann statt dessen auch als veränderlicher Widerstand R2 betrieben werden.

Als Potentiometer 2 ist der in der Offenlegungsschrift DE 43 35 004 A1 beschriebene Sensor geeignet. Bezüglich des Aufbaus des Sensors S sowie der elektrischen Beschaltung wird auf die genannte Offenlegungsschrift verwiesen, die hiermit Teil der Beschreibung ist.

Der Positionsgeber 1 ist derart geformt, dass durch ihn auf der Kontaktelektrode 34 ein punktueller Druck P erzeugt werden kann. Eine Kugel hat sich hierfür als die geeignete Form erwiesen.

Der Positionsgeber 1 kann ferromagnetisch oder permanentmagnetisch sein. Ist beispielsweise der Kolben 20 oder ein Teil des Kolbens 20 permanentmagnetisch ausgebildet, kann der Positionsgeber 1 ferromagnetisch sein. Ist hingegen der Positionsgeber 1 permanentmagnetisch, kann der Kolben 20 ferromagnetisch sein.

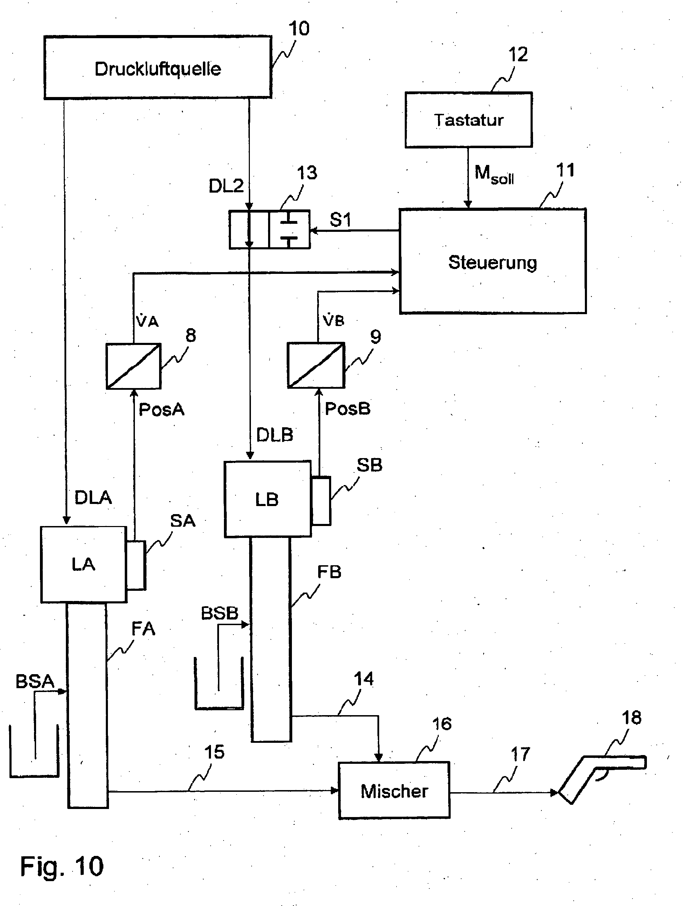

Der erfindungsgemäße Sensor S zur Erfassung der Position des Kolbens 20 kann in einer Vorrichtung zum Fördern und Dosieren von zwei Materialkomponenten, wie in Figur 10 gezeigt, verwendet werden. Bei dem System zum Fördern von Beschichtungsmaterial, das im Folgenden auch als Fördersystem bezeichnet wird, werden zwei Komponenten oder Beschichtungsmaterialien BSA und BSB gefördert und gemischt. Die Komponente BSA kann beispielsweise Lack und die Komponente BSB Härter sein.

Das Fördersystem umfasst einen ersten Luftmotor LA, welcher den in Figur 1 beschriebenen Aufbau aufweisen kann. Der Luftmotor LA wird über Druckluft DLA angetrieben und treibt selbst wiederum eine Farbstufe FA an, die auch als Förderpumpe bezeichnet wird. Dazu ist der Luftmotor LA mit dem Ende 21.2 der Kolbenstange 21 mit der Farbstufe FA verbunden. Die Position des Kolbens des Luftmotors LA wird über einen ersten Sensor SA, der wie in den Figuren 1 bis 9 gezeigt ist, erfasst. Die Farbstufe FA fördert Beschichtungsmaterial BSA über eine Druckleitung 15 zu einem statischen Mischer 16. Daneben ist ein zweiter Luftmotor LB vorhanden, der über Druckluft DLB angetrieben wird und seinerseits eine Farbstute FB antreibt. Die Luftmotoren LA und LB, die Sensoren SA und SB sowie die Farbstufen FA und FB können gleich aufgebaut sein. Die Farbstufe FB fördert Beschichtungsmaterial BSB über eine Druckleitung 14 zum Mischer 16. Im Mischer 16 werden die beiden Beschichtungsmaterialien BSA und BSB gemischt und anschließend uber eine Schlauchleitung 17 an eine Spritzpistole 18 geleitet.

Der Sensor SA liefert ein Positionssignal PosA, das Auskunft über die Lage des Kolbens im Luftmotor LA gibt. Aus der Änderung der Lage des Kolbens lässt sich die pro zeiteinheit geförderte Menge VA des Beschichtungsmaterials BSA bestimmen. Mit Hilfe einer entsprechenden Umrecheneinheit 8 lässt sich somit aus der zeitlichen Änderung des Positionssignals PosA die pro Zeiteinheit geförderte Menge VA des Beschichtungsmaterials BSA, welche auch als Förderstrom bezeichnet wird, berechnen und als Eingangsgröße der Steuerung 11 zur Verfügung stellen.

Am Luftmotor LB ist ein zweiter Sensor SB angeordnet, der zur Erfassung der Position des Kolbens des Luftmotors LB dient. Aus dem zeitlichen Verlauf des vom zweiten Sensor SB erzeugten Positionssignals PosB wird mit Hilfe einer entsprechenden Umrechnungseinheit 9 der Förderstrom VB ermittelt, den die Förderstufe FB in die Druckleitung 14 fördert. Dieser Förderstrom VB wird als weiteres Eingangssignal der Steuerung 11 zur Verfügung gestellt.

Um die beiden Materialien BSA und BSB in einem bestimmten Verhältnis Mₛₒₗₗ mischen zu können, ist ein entsprechender Regelkreis vorgesehen, wobei die Steuerung 11 Teil des Regelkreises ist. Mit Hilfe einer Tastatur 12 kann das Mischungsverhältnis Mₛₒₗₗ zwischen den beiden Beschichtungsmaterialien BSA und BSB, welches als Mₛₒₗₗ bezeichnet wird, vorgegeben werden.

Die Steuerung 11 errechnet aus den beiden Förderströmen VA und VB sowie dem gewünschten Mischungsverhältnis Mₛₒₗₗ ein entsprechendes Stellsignal S1.

Das Stellsignal S1 dient als Steuersignal für ein Steuerventil 13, welches, wie in Figur 10, als 2-Wege-Magnetventil ausgebildet sein kann. Ist das Ventil 13 geöffnet, strömt von der Druckluftquelle 10 die Druckluft DL2 durch das Ventil 13 und liegt als Druckluft DLB am zweiten Luftmotor LB an. Ist das Steuerventil 13 hingegen geschlossen, strömt durch das Ventil 13 keine Druckluft mehr, so dass der Luftmotor LB nicht mehr mit Druckluft beaufschlagt wird und damit der Kolben nicht mehr angetrieben wird. Demzufolge wird dann auch kein Beschichtungsmaterial BSB mehr über die Farbstufe FB in die Druckleitung 14 zum Mischer 16 gefördert. Da jedoch am Luftmotor LA nach wie vor die Druckluft DLA anliegt, fördert die Farbstufe FA nach wie vor Beschichtungsmaterial BSA über die Druckleitung 15 zum Mischer 16.

Statt des in Figur 10 gezeigten 2-Wege-Ventils kann auch ein steuerbarer Druckregler, beispielsweise ein Proportional-Druckreqler, verwendet werden. In diesem Fall lässt sich die Druckluft DLB nicht nur an- und ausschalten, sondern beliebig einstellen.

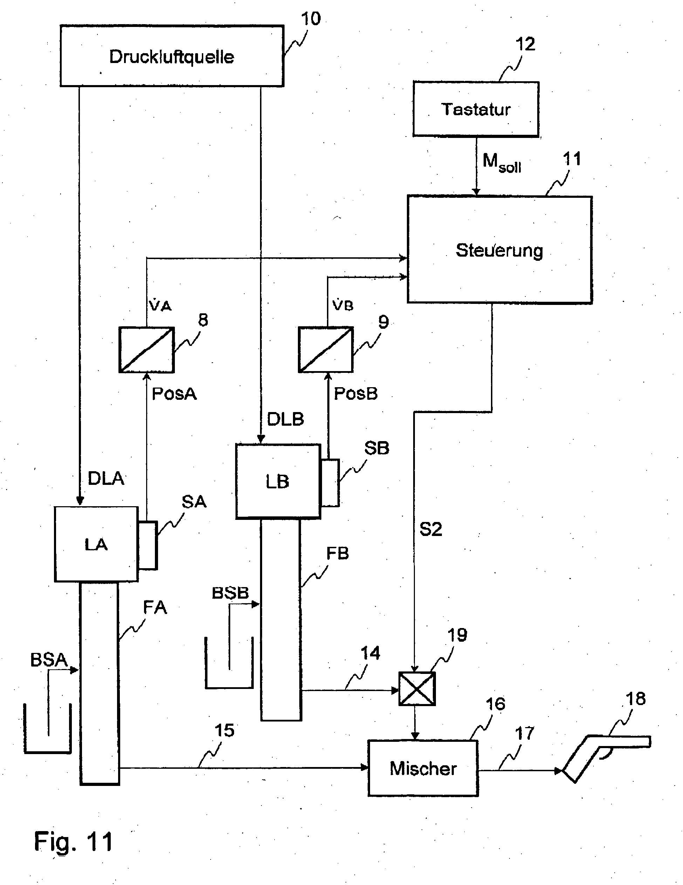

In Figur 11 ist eine zweite mögliche Ausführungsform eines Systems zum Fördern von Beschichtungsmaterial zum beschichten von Werkstücken als Blockdiagramm gezeigt. Die Druckluftquelle 10, der Luftmotor LA, der Sensor SA, die Farbstufe FA, der Luftmotor LB, der Sensor SB, die Farbstufe FB, der Mischer 16 und die Spritzpistole 18 sind baugleich zu den Komponenten, wie sie in Figur 10 gezeigt sind. Statt wie bei der Ausführungsform gemäß Figur 10 auf der Luftseite zu regeln, kann die Regelung auch auf der Farbseite gemäß dem Blockdiagramm aus Figur 11 erfolgen. Dazu ist auf der Farbseite zwischen dem Mischer 16 und die Farbstufe FB ein Druckregler 19 geschaltet, der abhängig von dem von der Steuerung 11 erzeugten Steuersignal 32 mehr oder weniger viel Beschichtungsmaterial BSB dem Mischer 16 zuführt. Die Steuerung 11 berechnet, wie bereits bei der Ausführungsform gemäß Figur 10 beschrieben, aus den beiden Forderströmen VA und VB sowie dem gewünschten Mischungsverhältnis M_{SO11} ein entsprechendes Stellsignal S2.

Welche der beiden Ausführungsformen des Fördersystems zum Einsatz kommen soll, hängt von den technischen Randbedingungen ab.

Statt mit dem Sensor S die Position des Kolbens 20 zu erfassen, ist es auch möglich mit dem Sensor S irgend eine andere angetriebene Komponente des Motors L, LA, LB oder der Farbstufe FA, FB zu erfassen. So kann beispielsweise mit dem Sensor S auch die Stellung der Kolbenstange 21 erfasst werden.

Vorteilhafterweise kann der erfindungsgemäße Sensor S ohne weiteres an einen bestehenden Luftmotor oder eine Farbstufe angekoppelt werden, um dessen Hub zu messen, ohne dass der Luftmotor beziehungsweise die Farbstufe umgebaut werden muss.

Die vorhergehende Beschreibung der Ausfuhrungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

### Bezugszeichenliste

- 1: Kugel
- 2: Potentiometer
- 3.1: Gehäusedeckel
- 3.2: Gehäuseboden
- 4: elektrischer Anschluss
- 5: Noppen
- 6: Schraube oder Niete
- 8: Signalwandler
- 9: Signalwandler
- 10: Druckluftquelle
- 11: Steuerung
- 12: Tastatur
- 13: Stellglied
- 14: Leitung
- 15: Leitung
- 16: Mischer
- 1/: Leitung
- 18: Sprühpistole
- 19: Stellglied
- 20: Kolben
- 21: Kolbenstange
- 21.1: erstes Ende der Kolbenstange
- 21.2: zweites Ende der Kolbenstange
- 22: Zylinderdeckel
- 22.1: Bohrung
- 23: Zylinderwand
- 24: Zylinderboden
- 24.1: Bohrung
- 26: Anschlussleilung
- 29: erste Folie
- 30: zweite Folie
- 31: dritte Folie
- 32: Aussparung
- 33: Kalibrieranschlüsse
- 34: Kontaktelektrode
- 36: Widerstandsstrecke
- 38: Zuleitungen
- BSA: Beschichtungsstoff A
- BSB: Beschichtungsstoff B
- DL: Druckluft
- DLA: Druckluft für Luftmotor A
- DLB: Druckluft für Luftmotor B
- DL2: Druckluft
- FA: Farbstufe A
- FB: Farbstufe B
- L: Luftmotor
- LA: Luftmotor A
- LB: Luftmotor B
- P: Druckpunkt
- PosA: Position des Kolbens A
- PosB: Position des Kolbens B
- S1: Stellsignal
- S2: stellsignal
- S: Positionssensor
- SA: Positionssensor für Luftmotor A
- SB: Positionssensor für Luftmotor B
- VA: Förderstrom
- VB: Förderstrom
- Mₛₒₗₗ: gewünschtes Mischungsverhältnis

## Patentansprüche

1. Sensor zum Erfassen der Position eines beweglichen magnetischen Objekts,
- mit einer Widerstandsbahn (36) und einer darüber angeordneten Kontaktelektrode (34),
**dadurch gekennzeichnet, dass**
- ein magnetischer Positionsgeber (1) vorgegehen ist, der derart ausgebildet ist, dass er dem magnetischen Objekt (20) folgen kann, der entlang der Kontaktelektrode (34) bewegbar ist, und durch den die Kontaktelektrode (34) mit der Widerstandsbahn (36) in Kontakt bringbar ist.

2. Sensor nach Patentanspruch 1,
bei dem der Positionsgeber (1) ferromagnetisch oder permanentmagnetisch ist.

3. Sensor nach Patentanspruch 1 oder 2,
bei dem der Positionsgeber (1) derart geformt ist, dass durch ihn ein punktueller Druck (P) auf der Kontaktelektrode (34) erzeugbar ist.

4. Sensor nach einem der Patentansprüche 1 bis 3,
bei dem der Positionsgeber (1) die Form einer Kugel hat.

5. Sensor nach einem der Patentansprüche 1 bis 4, mit einem Gehäuse (3) aus Aluminium.

6. Sensor nach einem der Patentansprüche 1 bis 4,
mit einem Gehäuse (3) aus einem elektrisch leitenden Kunststoff.

7. Verwendung des Sensors einem der Patentansprüche 1 bis 6,
in einer Fördervorrichtung zum Fördern von Beschich-tungsmaterial (BSA; BSB), Klebstoff, Schaum mit Treibmittel, Dichtmaterial, Farbe oder Vergussmasse.

8. Fördervorrichtung mit einem Sensor zum Erfassen der Position eines beweglichen magnetischen Objekts nach einem der Patentansprüche 1 bis 6,
- mit einer Förderpumpe (FA),
- mit einem Motor (LA) zum Antreiben der Förderpumpe (FA),
- wobei das Objekt eine angetriebene magnetische Komponente (20) des Motors (LA) oder der Förderpumpe (FA) ist,
- wobei der Sensor (SA) derart angeordnet ist, dass mit ihm die Postition (PosA) der Komponente (20) erfassbar ist, und
- mit einer Steuerung (11), die derart ausgebildet und betreibbar ist, dass sie zur Steuerung das vom Sensor (SA) stammende Signal (PosA) benutzt.

9. Fördervorrichtung nach Patentanspruch 8,
bei dem die Komponente der Kolben (20) oder die Kolbenstange (21) des Motors (LA), der Kolben oder die Kolbenstange der Farbstufe (FA) oder eine Kupplung, die den Motor (LA) mit der Farbstufe (FA) verbindet, ist.

10. Fördervorrichtung nach Patentanspruch 8 oder 9,
bei dem der Positionsgeber (1) ferromagnetisch oder permanentmagnetisch ist.

11. Fördervorrichtung nach Patentanspruch 8, 9 oder 10, bei dem der Positionsgeber (1) die Form einer Kugel hat.

12. Fördervorrichtung nach einem der Patentansprüche 8 bis 11,
bei dem der Kolben (20) ferrömagnetisch oder permanentmagnetisch ist.

13. Fördervorrichtung nach einem der Patentansprüche 8 bis 12,
- mit einer weiteren Förderpumpe (FB),
- mit einem weiteren Motor (LB) zum Antreiben der weiteren Förderpumpe (FB),
- mit einem weiteren Sensor (SB) zum Erfassen der Position (POSB) einer angetriebenen magnetischen Komponente (20) des weiteren Motors (LB) oder der weiteren Förderpumpe (FB),
- - wobei der weitere Sensor (SB) eine Widerstandsbahn (36) und eine darüber angeordnete Kontaktelektrode (34) aufweist, und
- - wobei der weitere Sensor (SB) einen magnetischen Positionsgeber (1) aufweist, der derart ausgebildet ist, dass er der magnetischen Komponente (20) folgen kann, wobei der Positionsgeber (1) entlang der Kontaktelektrode (34) bewegbar ist, und wobei durch den Positionsgeber (1) die Kontaktelektrode (34) mit der Widerstandsbahn (36) in Kontakt bringbar ist, und
- wobei die Steuerung (11) derart ausgebildet und betreibbar ist, dass sie anhand der Sensorsignale (PosA, PosB) das Mischungsverhältnis der von den Förderpumpen (FA, FB) geförderten Materialien (BSA, BSB) steuert.

14. Fördervorrichtung nach Patentanspruch 13,
- mit einer Druckluftquelle (10), um den Motor (LB) mit Druckluft (DLB) zu versorgen,
- mit einem von der Steuerung (11) gesteuerten Stelleinheit (13), über die die Druckluft (DLB) zur Versorgung des Motors (LB) einstellbar ist.

15. Fördervorrichtung nach Patentanspruch 13,
mit einer von der Steuerung (11) gesteuerten Stelleinheit (19), über die die Fördermenge des von der Förderpumpe (FB) geförderten Materials (BSB), einstellbar ist.

## Claims

1. A sensor for detecting the position of a moving magnetic object,
- comprising a resistance track (36) and a contact electrode (34) arranged there above,
**characterised in that**
- a magnetic position transmitter (1) is provided, which is configured in such a way that it can follow the magnetic object (20), which can be moved along the contact electrode (34), and by means of which the contact electrode (34) can be brought into contact with the resistance track (36).

2. The sensor according to claim 1,
wherein the position transmitter (1) is ferromagnetic or permanently magnetic.

3. The sensor according to claim 1 or 2,
wherein the position transmitter (1) is shaped in such a way that it can produce a localised pressure (P) on the contact electrode (34).

4. The sensor according to one of claims 1 to 3,
wherein the position transmitter (1) has the shape of a ball.

5. The sensor according to one of claims 1 to 4, comprising a casing (3) made of aluminium.

6. The sensor according to one of claims 1 to 4, comprising a casing (3) made of an electrically conductive plastic.

7. Use of the sensor according to one of claims 1 to 6, in a conveying device for conveying coating material (BSA; BSB), adhesive, foam with propellant, sealing material, colour or casting compound.

8. A conveying device, comprising a sensor for detecting the position of a moving magnetic object according to one of claims 1 to 6,
- comprising a feed pump (FA),
- comprising a motor (LA) for driving the feed pump (FA),
- wherein the object is a driven magnetic component (20) of the motor (LA) or of the feed pump (FA),
- wherein the sensor (SA) is arranged in such a way that it can be used to detect the position (PosA) of the component (20), and
- comprising a controller (11), which is configured and can be operated such that it uses the signal (PosA) coming from the sensor (SA) for controlling.

9. The conveying device according to claim 8,
wherein the component is the piston (20) or the piston rod (21) of the motor (LA), the piston or the piston rod of the colour stage (FA), or a coupling, which connects the motor (LA) to the colour stage (FA).

10. The conveying device according to claim 8 or 9,
wherein the position transmitter (1) is ferromagnetic or permanently magnetic.

11. The conveying device according to claim 8, 9 or 10, wherein the position transmitter (1) has the shape of a ball.

12. The conveying device according to one of claims 8 to 11,
wherein the piston (20) is ferromagnetic or permanently magnetic.

13. The conveying device according to one of claims 8 to 12,
- comprising a further feed pump (FB),
- comprising a further motor (LB) for driving the further feed pump (FB),
- comprising a further sensor (SB) for detecting the position (PosB) of a driven magnetic component (20) of the further motor (LB) or the further feed pump (FB),
- - wherein the further sensor (SB) has a resistance track (36) and a contact electrode (34) arranged there above,
- - wherein the further sensor (SB) has a magnetic position transmitter (1), which is configured to follow the magnetic component (20), wherein the position transmitter (1) can be moved along the contact electrode (34), and wherein the contact electrode (34) can be brought into contact with the resistance track (36) by means of the position transmitter (1), and
- wherein the controller (11) is configured and can be operated such that it controls the mixing ratio of the materials (BSA, BSB) conveyed by the feed pumps (FA, FB) on the basis of the sensor signals (PosA, PosB).

14. The conveying device according to claim 13,
- comprising a compressed air source (10) in order to supply the motor (LB) with compressed air (DLB), and
- comprising an actuator (13), which is controlled by the controller (11) and via which the compressed air (DLB) for supplying the motor (LB) can be adjusted.

15. The conveying device according to claim 13, comprising an actuator (19), which is controlled by the controller (11) and via which the feed quantity of the material (BSB) conveyed by the feed pump (FB) can be adjusted.

## Revendications

1. Capteur pour la détection de la position d'un objet magnétique,
- avec une piste de résistance (36) et une électrode de contact (34) agencée au-dessus de celle-ci, **caractérisé en ce que**
- il est prévu un indicateur de position magnétique (1) conçu de manière à pouvoir suivre l'objet magnétique (20), déplaçable le long de l'électrode de contact (34) et apte à être mis en contact avec la piste de résistance (36) par le biais de l'électrode de contact (34).

2. Capteur selon la revendication 1,
dans lequel l'indicateur de position (1) est ferromagnétique ou magnétique en permanence.

3. Capteur selon la revendication 1 ou 2,
dans lequel l'indicateur de position (1) est conçu de telle façon qu'il permet de produire une pression ponctuelle (P) sur l'électrode de contact (34).

4. Capteur selon l'une des revendications 1 à 3, dans lequel l'indicateur de position (1) présente une forme de boule.

5. Capteur selon l'une des revendications 1 à 4,
avec un boîtier (3) en aluminium.

6. Capteur selon l'une des revendications 1 à 4, avec un boîtier (3) constitué d'une matière plastique électriquement conductrice.

7. Utilisation du capteur selon l'une des revendications 1 à 6,
dans un dispositif de transport pour le transport de matériau de revêtement (BSA; BSB), de colle, de mousse avec un agent gonflant, de matériau d'étanchéité, de peinture ou de masse de scellement.

8. Dispositif de transport avec un capteur pour la détection de la position d'un objet magnétique déplaçable selon l'une des revendications 1 à 6,
- avec une pompe d'alimentation (FA),
- avec un moteur (LA) pour l'entraînement de la pompe d'alimentation (FA),
- dans lequel l'objet est un composant magnétique entraîné (20) du moteur (LA) ou de la pompe d'alimentation (FA),
- dans lequel le capteur (SA) est agencé de telle façon qu'il permet de détecter la position (PosA) du composant (20), et
- avec une commande (11) conçue et actionnée de manière à utiliser le signal (PosA) venant du capteur (SA) pour commander.

9. Dispositif de transport selon la revendication 8, dans lequel le composant est le piston (20) ou la tige de piston (21) du moteur (LA), le piston ou la tige de piston du niveau de couleur (FA) ou un accouplement reliant le moteur (LA) au niveau de couleur.

10. Dispositif de transport selon la revendication 8 ou 9,
dans lequel l'indicateur de position (1) est ferromagnétique ou magnétique en permanence.

11. Dispositif de transport selon la revendication 8, 9 ou 10,
dans lequel l'indicateur de position (1) présente la forme d'une boule.

12. Dispositif de transport selon l'une des revendications 8 à 11,
dans lequel le piston (20) est ferromagnétique ou magnétique en permanence.

13. Dispositif de transport selon l'une des revendications 8 à 12,
- avec une pompe d'alimentation (FB) supplémentaire,
- avec un moteur (LB) supplémentaire pour l'entraînement de la pompe d'alimentation (FB) supplémentaire,
- avec un capteur (SB) supplémentaire pour la détection de la position (PosB) d'un composant magnétique entraîné (20) du moteur supplémentaire (LB) ou de la pompe d'alimentation supplémentaire (FB),
- - dans lequel le capteur supplémentaire (SB) comporte une piste de résistance (36) et une électrode de contact (34) agencée au-dessus de celle-ci, et
- - dans lequel le capteur supplémentaire (SB) comporte un indicateur de position magnétique (1) conçu de manière à pouvoir suivre l'objet magnétique (20), dans lequel l'indicateur de position (1) est déplaçable le long de l'électrode de contact (34), et dans lequel l'indicateur de position (1) permet de mettre l'électrode de contact (34) en contact avec la piste de résistance (36), et
- dans lequel la commande (11) est conçue et actionnée de manière à commander le rapport de mélange des matériaux (BSA, BSB) transportés par les pompes d'alimentation (FA, FB) à l'aide des signaux de capteur (PosA, PosB).

14. Dispositif de transport selon la revendication 13,
- avec une source d'air comprimé (10) destinée à alimenter le moteur (LB) en air comprimé (DLB),
- avec une unité de réglage (13) commandée par la commande (11), permettant de régler l'air comprimé (DLB) pour l'alimentation du moteur (LB).

15. Dispositif de transport selon la revendication 13, avec une unité de réglage (19) commandée par la commande (11), permettant de régler le débit de matériau (BSB) transporté par la pompe d'alimentation (FB).
